# EUROPEAN PATENT APPLICATION

(11) **EP 3 054 338 A1**
(43) Date of publication of application: **10.08.2016**
(21) Application number: 15000318.4
(22) Date of filing: 04.02.2015
(51) Int. Cl.: G02B 21/28

(54) **Mounting device for a sample and method for removing a sample**

(71) Applicant: Georg-August-Universität Göttingen Stiftung Öffentlichen Rechts, 37073 Göttingen (DE)
(72) Inventor: Li, Weixing, D-37085 Göttingen (DE)
(74) Representative: Friedrich, Andreas

(57) **Abstract**

The invention refers to a mounting device (1) for a sample that is to be preferably visually examined, the mounting device (1) having
• a vacuum container (2),
• a cooling unit (12),
• a sample mount (40), which is thermally connected to and can be cooled by the cooling unit (12), and a sample holder (46), that is detachable from the sample mount (40), the sample holder (46), the sample mount (40) and the cooling unit (12) being arranged in the vacuum container (2) and the sample holder (46) being detachable from the sample mount (40), when the sample mount (40) is cooled by the cooling unit (12), without heating a sample, which is in the sample holder (46), to more than the glass transition temperature of water.

## Description

The invention refers to a mounting device for a sample that is to be preferably visually examined. The invention also refers to a visual examination device with a mounting device of this sort and a method for removing a cooled sample from such a mounting device.

For a multitude of various, particularly visual examination methods, for example visual fluorescence microscopy, it is advantageous, to cool the sample to very low temperatures. This enables, for example, single-molecule fluorescence microscopy to be carried out. For this, so-called cryo microscopes are used to hold the samples to be examined in a mounting device, enabling the sample to be cooled to the desired temperatures. Here, for example, liquid nitrogen or liquid helium is used. Such mounting devices are however also used in other methods and the devices needed to carry out the experiments.

The corresponding mounting devices for the samples therefore have a cooling device, in which, for example, liquid helium or liquid nitrogen is used. This is kept in a closed container or the liquid coolant is run through the cooling device. Both lead to mechanical fluctuations, vibrations and movements of the cooling device, which should not reach the sample to be examined to ensure a good resolution and examination precision. At the same time however, good thermal contact between the sample and the cooling device must be achieved. Prior art shows a number of different systems that can solve this task.

US 8,746,008 B1 describes a system by which the sample or a sample mount, on which the sample is arranged, is connected to the cooling device via flexible copper wires or thin copper sheets. A good heat coupling is achieved due to the high thermal conductivity of the copper and a mechanical decoupling is achieved due to the flexibility of the wires used. In order to achieve a further mechanical decoupling between the cooling device, for which a compressor is used, and the holder for the sample, the two components are not exactly aligned but are aligned offset to one another. This means that the distance for the transport of heat between the sample to be cooled and the cooling device is quite long, leading to quite a slow cooling of the sample.

In order to prevent further thermal radiation and thermal conduction within the device, the sample is arranged in a vacuum chamber, which has to be flushed to exchange the sample. In addition, the device and, particularly the sample, have to be warmed up, to prevent the sample icing over when penetrating air mixes with the moisture inside. This makes changing the sample difficult and time consuming.

Similar devices are known from US 4,745,761 and US 4,161,747. US 4,161,747 however, refers to a holder for a diode laser, so exchanging a sample, that would correspond to exchanging the diode, is not intended.

DE 10 2012 019 688 A1 also refers to a similar sample mounting device.

The present invention aims to propose further developing a mounting device according to the preamble so that sufficient thermal and mechanical stability is provided and, at the same time, the sample to be examined can be easily removed or exchanged, without having to expose the sample to heat.

The invention solves the problem at hand with a mounting device for a sample, that should preferably be visually examined, the mounting device having a vacuum container, a cooling unit, a sample mount, which is thermally connected to and can be cooled by the cooling unit, and a sample holder that is detachable from the sample mount, the sample holder, the sample mount and the cooling unit being arranged in the vacuum container and the sample holder being detachable from the sample mount, when the sample mount is cooled by the cooling unit, without a heating of a sample, which is in the sample holder, to more than the glass transition temperature of water.

The glass transition temperature of water is the temperature at which the transition between amorphous ice and crystalline ice takes place. When a biological sample is cooled then the water inside the biological cell freezes. If the water forms crystalline ice this will destroy the cell and thus the biological sample. It is however possible to cool biological samples below the glass transition temperature of water so that amorphous ice is formed without the intermediate step of forming crystalline ice. In this case the biological cell stays intact and can be examined. With a mounting device according to the present invention it becomes possible to detach the sample mount and the sample from the remaining parts of the mounting device without heating the sample above this glass transition temperature of water. It thus becomes possible to exchange the sample by another sample without having to use complex and expensive methods of heating and cooling the sample without generating crystalline ice.

The mounting device therefore has a cooling unit with which the sample mount can be cooled. This is thermally connected to the cooling unit. The sample holder, onto which the actual sample, for example, in the form of a slide, can be arranged, can be arranged on the sample mount itself. This way, sample holder makes thermal contact with the sample mount, so the sample that is preferably to be visually examined, can be cooled. Depending on the used cooling unit and possibly the coolant to be used, the temperature of the sample can be cooled to different target temperatures, for example less than 100 K, less than 90 K or, for example, when using liquid hydrogen, to about 10 K. Preferably the sample is cooled to 89 K using liquid nitrogen or to about 30 K using liquid helium.

Sample holder, sample mount and cooling unit are arranged in the vacuum container that is evacuated for measuring. A vacuum is hereby produced in the gap between the cooling unit and the vacuum container, so that thermal conduction is either weak or cannot take place. The wall of the vacuum container can, for example, be in contact with the ambient air and therefore have room temperature. In order to avoid a strong build-up of heat in the cooling unit due to thermal radiation of the outer wall of the vacuum container at room temperature, a radiation shield, for example, a polished stainless steel plate can be arranged inside the vacuum container, to serve as a reflector for the thermal radiation emitted by the walls of the vacuum container. It is particularly preferred that this radiation shield surrounds not only the cooling unit but also the sample mount and the sample holder, which may be on it. It is particularly even more preferred to use a window which has a coating, which absorbs infrared radiation, in order to further reduce sample heating.

A mounting device according to the invention is also designed so that a cooled sample, that is in the sample holder, can be removed from the mounting device. Here, the sample holder is removed from the sample mount and the link between the two elements disconnected. It is important to ensure that the sample is not heated to more than the glass transition temperature of water. Of course, it is also possible to insert another cooled sample holder or the same sample holder with a new sample into the mounting device. For this, the sample holder is arranged on the sample mount while the sample mount is being cooled by the cooling unit. Using the mounting device according to the invention, it is thus possible, to examine various samples using the desired examination method in a relatively short time without heating the sample, the sample holder and the sample mount before the samples in the mounting device can be removed and without cooling the said components when a new sample and/or a new sample holder is inserted, as is necessary when using devices from prior art. For this, a new sample and said components simply have to be cooled by the cooling unit, as long as it has not already been cooled to the desired temperature by another cooling device.

The invention also solves the problem at hand with a method for removing a cooled sample from a mounting device (1) that has an evacuated vacuum container (2), in which the sample is fixed, the method having the following steps:
a) Flushing the evacuated vacuum container (2) with a dry gas, which has a temperature of below the glass transition temperature of water,
b) Opening a suitable opening of the vacuum container (2) to remove the sample, so that the dry gas leaves the vacuum container (2) in a gas stream through the opening,
c) Loosening the mounting of the sample in the vacuum container (2) and
d) Removing the sample from the vacuum container (2) within the gas stream.

This method can be carried out with mounting devices according to the invention and with other mounting devices, in which the sample is kept and cooled in an evacuated vacuum container. It is just important that the vacuum container has an opening through which the sample can be removed or inserted into the vacuum container.

When changing the sample with a mounting device from prior art, in which the sample is placed in the vacuum container, the vacuum container must be aired first. Pressure balance takes place between the interior and exterior of the vacuum container, during which air flows into the evacuated vacuum container. If, in this condition, for example, liquid helium or liquid nitrogen is in one of the cooling units of the mounting device, the sample is further cooled via the sample mount and a sample holder if present. It is advantageous if the temperature is below the glass transition temperature of water, for example below 115 K. The inflowing air contains a certain amount of moisture that turns to ice and crystallizes out. This leads to an icing over of the interior of the vacuum container and therefore also the sample mount and the sample. Hence the need to initially heat the sample when using prior art devices.

Using the method according to the present invention, this is no longer necessary. First, the evacuated vacuum container is flushed with a dry gas that has a temperature which is below the glass transition temperature of water. This dry gas can be, for example, liquid nitrogen or helium, this dry gas is preferably taken directly out of a volume in which the liquefied gas is found. This volume can be the volume from which the cooling unit is filled with liquid or liquefied gas. This evaporates and thereby provides the necessary cold dry gas in the desired purity. This guarantees that the dry gas has no moisture, meaning the interior of the vacuum container cannot ice over. After the vacuum container is flushed with the dry gas, the opening of the vacuum container can be opened, enabling access to the sample. Preferably, there will be a constant flow of dry cold gas into the vacuum container, so that it can then leave the vacuum container through the open opening. A gas stream is produced, also referred to as a gas curtain. The temperature inside this gas stream is so low that the cooled sample can be removed. It is important to ensure the sample does not leave the gas stream on removal. As an alternative or in addition to this, the gas stream can also be led into a container that is subsequently largely, nearly completely, or ideally completely filled with the dry cold gas. In this way, an exchange of samples can take place inside the container and the new sample can be inserted through the gas stream into the inside of the open vacuum container. Finally, the vacuum container is closed again and evacuated. No heating of the sample mount or the interior of the vacuum container or a final cooling is needed, meaning an exchange of samples can take place quickly, efficiently and therefore also cheaply.

In a prefered embodiment of the method according to the present invention the amount of dry gas leaving the vacuum container is increased before loosening the mounting of the sample. After the opening of the vacuum container has been opened in step (b) of the method according to the present invention it is possible to increase the amount of dry gas. Under certain circumstances this is not possible before the opening has been opened since the closed opening might not withstand the pressure of the incoming dry gas.

A preferred arrangement of a mounting device of the present invention is that the sample mount is fixed on an intermediate plate, which is arranged on an interior of the vacuum container. This is particularly advantageous when the cooling unit is made of a dewar vessel or another container, in which a liquefied gas such as helium or nitrogen can be found. A complete thermal decoupling of the cooling device is obviously not possible, leading to the liquefied gas in the interior of the container boiling and regaining a gas state. This can lead to movements and vibrations, that should, when possible, not reach the sample holder that is on the sample mount. This guarantees the mechanical stability and robustness of the sample to be examined. For this reason, it makes sense to fix the sample mount on the vacuum container via the intermediate plate, but not on the cooling unit. The cooling unit is only in thermal contact with the sample mount, in order to cool the sample in the sample holder. The intermediate plate can, for example, be design as a stainless steel plate.

It has been proven to be advantageous to arrange the intermediate plate over the contact elements on the interior of the vacuum container, that are made of a material with a lower thermal conductivity than the material of the intermediate plate and the material of the vacuum container. There is therefore advantageously no direct thermal contact between the intermediate plate and the vacuum container, so that no direct heat flux or heat transfer is possible between these two components, whose materials can have a fairly high thermal conductivity. Instead, between these two components, there is at least one contact element with a much lower thermal conductivity. In order to further decrease the thermal flow it is advantageous to choose the contact areas of the contact elements as small as possible.

Preferably, the sample mount is arranged on the intermediate plate over the contact elements that are made of a material with a lower thermal conductivity than the material of the intermediate plate and the material of the sample mount. This also prevents direct contact and a direct heat transfer between the components.

Preferably, the contact elements are made of polyimide or teflon. They can be used as spacer elements between the components to be connected, that are subsequently connected using screws that are preferably made of polyimide or teflon. This drastically reduces the warming of the sample via the transfer of heat from the vacuum container to the sample.

It has been proven to be advantageous to have the cooling unit with a container for storing the liquefied gas, particularly liquid nitrogen or liquid helium. In this way, the desired temperatures can be reached and particularly the use of liquid nitrogen presents a cheap form of cooling unit.

Preferably, the sample mount is connected to the cooling unit via at least one, but preferably four flexible thermal conduction elements, which are particularly made of copper, but preferably made of oxygen-free copper. Copper is highly conductive and the use of oxygen-free copper makes sure that no oxygen can escape the copper that could reduce the vacuum inside the vacuum container. In addition the risk of corrosion is reduced. As described above, thermal contact between the cooling unit and the sample mount is guaranteed due to the flexibility of the thermal conduction elements but a mechanical decoupling of the two components also occurs. Preferably, a thermal conduction element is made of a number of copper wires, that are twisted together to make them more manageable.

It has been proven to be particularly advantageous to have at least one heat distributor arranged on the cooling unit, with which the sample mount is thermally connected. It is advantageous if this is made of a copper sheet, preferably made of oxygen-free copper, a thermal energy guiding bed should be arranged between the sheet and the cooling device, which should be made of or contain indium.

All of these measures are there to guarantee the best possible thermal contact between the cooling unit and the components between the cooling unit and the sample. This ensures a very good thermal contact leading to a high thermal current where it is needed.

In a particularly preferred arrangement of the mounting device, the sample holder is magnetically coupled to the sample mount. This makes it particularly easy to remove the sample holder from the sample mount and guarantees an easy method to produce a connection between the sample holder and the sample mount. In this way, no screws need to be loosened or tightened.

It is advantageous for the vacuum container to have at least one window, through which the electromagnetic radiation can be sent to one of the samples arranged in the sample holder. The window is advantageously made of a quartz crystal and is between 0.2 mm and 0.6 mm preferably 0.5 mm thick. This reduces visual distractions and other disruptive effects and guarantees that the window does not lose its form when the vacuum container is evacuated and the vacuum in created in the inside. In addition it becomes possible to use a dry objective having better optical characteristics than immersion objectives. With these values it is possible to adjust the distance between the sample and the objective to be between 1.4 mm and 1.6 mm, preferably 1.5 mm.

The invention also solves the problem at hand with a visual examination device, particularly a microscope or spectroscope, with a mounting device according to one of the above claims. The microscope can advantageously be a fluorescence microscope. In a preferred arrangement, the window and the opening are positions such in the vacuum container that the electromagnetic radiation from below can penetrate into the mounting device und the vacuum container. In order to extract or remove a sample, it is advantageous to remove the mounting device from the rest of the examination device and, for example, to set it aside, in order to achieve better access to the opening which is otherwise difficult to reach. After exchanging or inserting the sample, the mounting device has to be positioned back to its original direction and position, relative to the rest of the examination device. This happens quite easily using at least three positioning elements, each with a longitudinal groove and a ball element. Here, for example, a part of the mounting element that comprises the ball is arranged on the vacuum container or another component of the mounting device. The corresponding part with the longitudinal groove is positioned, for example, on a sheet or another component of the examination device. The groove can also be designed as rails, for example made of two parallel, bar-shaped objects. If then the mounting device is arranged back on the rest of the examination device, a stable and secure positioning is reached due to the particularly simple arrangement of the mounting elements and it guarantees that the mounting device centralizes itself. It has been proven to be advantageous to use particularly exactly three of such mounting elements, the used longitudinal grooves or rails being arranged offset, each at 120°:

An example for carrying out the present invention is shown in the drawing and is described in detail as follows. It shows:
Figure 1- a sectional view through the mounting device according to a first example for carrying out the present invention and
Figure 2- an enlarged view from figure 1.

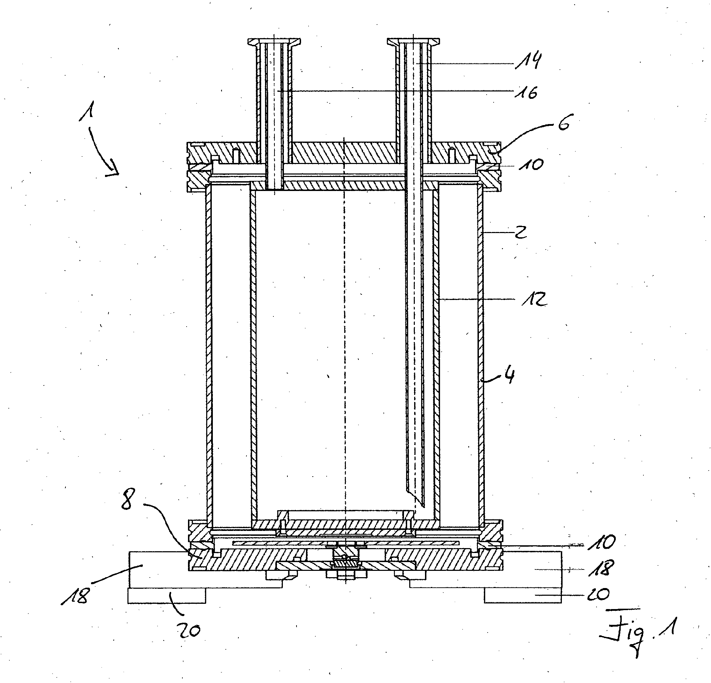

Figure 1 shows a sectional view through a mounting device 1 according to a first example for carrying out the present invention. It has a vacuum container 2, comprising a cylindrical housing 4, an upper flange 6 and a lower flange 8. Between adjacent components of the vacuum container 2 a sealing ring 10 is arranged, that can be made of fluoroelastomers, such as those available on the market known as "Viton". These sealing rings 10 ensure the vacuum container 2 is sealed and they are there to absorb shocks and vibrations.

Within the vacuum container 2 there is the cooling unit 12, that is designed as a container for liquid nitrogen as shown in the execution example. This container has an inlet 14 and an outlet 16, the inlet 14 being able to let liquid nitrogen into the cooling unit 12, the outlet 16 being able to let gaseous nitrogen out of the cooling unit 12. Inlet 14 and outlet 16 are used to form a seal in the upper flange 6 of the vacuum container 2. Inside the cooling unit 12, the boiling and vaporizing of the nitrogen can lead to vibrations that can be transferred via the inlet 14 and the outlet 16 to the upper flange 6. The sealing rings 10 made of a vibration-absorbent material prevent or seriously reduce this being transferred to the lower flange 8 of the vacuum container 2.

The lower flange 8 has three feet 18, with which the mounting device 1 is arranged on moveable bearings 20. Two of these three feet 18 are shown in figure 1. They are horizontally moveable in figure 1, so that the position of the mounting device 1 can be set to a further component of an examination device that is not shown.

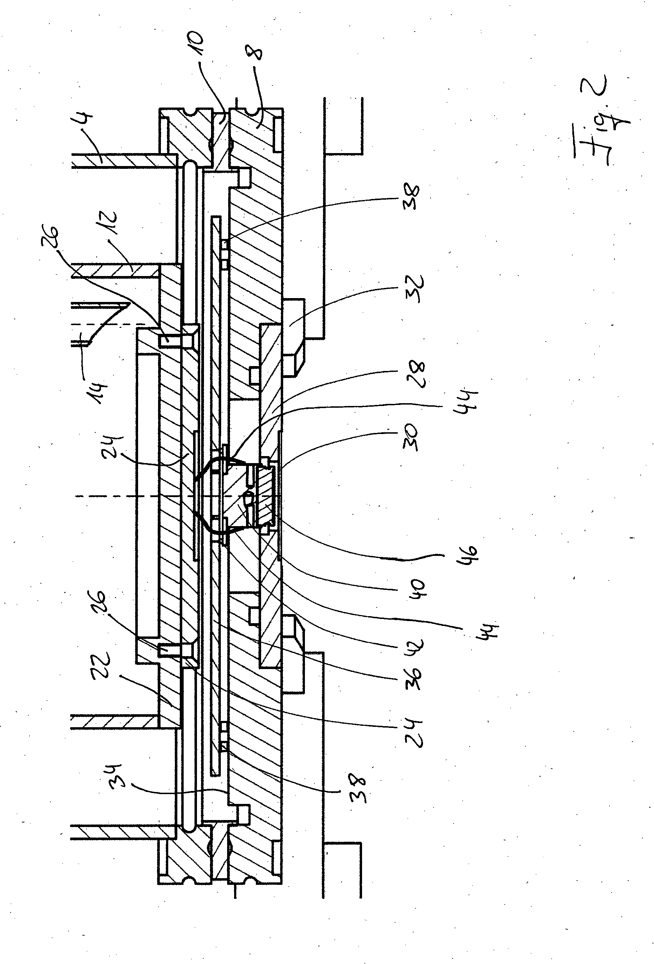

Figure 2 shows an enlarged view of the lower part of figure 1. You can see the housing 4, a sealing ring 10 and the lower flange 8 of the vacuum container 2. Inside the vacuum container 2 the cooling unit 12 is shown with the lower end of the inlet 14.

At a base element 22 of the cooling unit 12 there is a heat distributor 24, that can, for example, be designed to be made of copper sheets preferably made of oxygen-free copper sheets. The heat distributor 24 is arranged with screws 26 on the base element 22 of the cooling unit 12. Between the heat distributor 24 and the base element 22 an indium lining can be used to improve the thermal contact between the two components.

The lower flange 8 has an opening in the central part, which is closed with a locking element 28. This locking element 28 has a window 30 in the central part that can, for example, be made of quartz crystal and is between 0.2 mm and 0.6 mm, preferably 0.5 mm thick. The locking element 28 is held by clamps 32 in the opening in the lower flange 8 and can be removed by loosening the clamps 32, giving access to the vacuum container 2 and therefore also the sample.

In the interior 34 of the vacuum container 2 there is an intermediate plate 36, which does not have direct contact to the lower flange 8. On the contrary, contact elements 38 are between the intermediate plate 36 and the lower flange 8 of the vacuum container 2. They are preferably made of teflon and have a very low thermal conductivity reducing a thermal transport from the lower flange 8, which is at room temperature, to the inside of the vacuum container 2.

Arranged on the intermediate plate 36 is a sample mount 40, which does not have direct contact to the intermediate plate 36. On the contrary, a further contact element 42 is arranged between the intermediate plate 36 and the sample mount 40, that is made of polyimide as shown in the execution example. Even this material has a very low thermal conductivity, reducing a heat transfer from the lower flange 8 via the intermediate plate 36 to the sample mount 40.

The sample mount 40 is connected to the heat distributor 24 via thermal conduction elements 44. These thermal conduction elements 44 are preferably made of oxygen-free copper and therefore guarantee a good thermal connection of the sample mount 40 to the heat distributor 24 and therefore also to the base element 22 of the cooling unit 12.

A sample holder 46 is arranged on the side facing the window 30 of the sample mount 40, on which the actual sample if situated on the side facing the window 30.

If, when using a mounting device 1 according to figures 1 and 2, a sample that is in the sample holder 46 needs to be changed, then the vacuum container 2 has to be flushed first. Here, an inlet pipe not shown in the figures, directs for example gaseous nitrogen branched off from a reservoir of liquid nitrogen, into the gap between the vacuum container 2 and the cooling unit 12. As soon as the pressure in the interior of the vacuum container 2 is as big as or bigger than the surrounding external pressure, the locking element 28 can be removed by loosening the clamps 32. The cold dry gas that was directed into the vacuum container 2 now exists though the opening in the lower flange 8 and creates a gas stream or gas curtain there, within which the sample with the sample holder 46 can be easily removed from the sample mount 40. By reversing the steps of the method, a new sample can be inserted and the vacuum container 2 closed again. In addition the vacuum can be re-established through the inlet pipe or through a separate pipe.

Using a mounting device 1 according to the invention, it is possible to cool a sample using liquid nitrogen in the cooling unit 12 to a temperature of about 90 K. This only takes a few minutes. It is also possible, to remove the sample and insert a new one without increasing temperature above 115 K using the displayed and described method without having to heat the interior of the vacuum container. Attempts have shown that, with a mounting device according to the invention, single-molecule microscopy and wide-field microscopy can be carried out, the localization precision being comparable to the molecular size. Further optimizations, for example, by using liquid helium, which would make the method and examination more costly, are not necessary, as achieving a more exact lateral resolution of a corresponding molecular size would not provide any significant additional information.

### Reference numerals

- 1 -: Mounting device
- 2 -: Vacuum container
- 4 -: Housing
- 6 -: Upper flange
- 8 -: Lower flange
- 10 -: Sealing ring
- 12 -: Cooling unit
- 14 -: Inlet
- 16 -: Outlet
- 18 -: Foot
- 20 -: Bearing
- 22 -: Base element
- 24 -: Heat distributor
- 26 -: Screw
- 28 -: Locking element
- 30 -: Window
- 32 -: Clamp
- 34 -: Interior
- 36 -: Intermediate plate
- 38 -: Contact element
- 40 -: Sample mount
- 42 -: Contact element
- 44 -: Thermal conduction element
- 46 -: Sample holder

## Claims

1. A mounting device (1) for a sample, that is to be preferably visually examined, the mounting device (1) having
• a vacuum container (2),
• a cooling unit (12),
• a sample mount (40), which is thermally connected to and can be cooled by the cooling unit (12), and
• a sample holder (46), that is detachable from the sample mount (40), the sample holder (46), the sample mount (40) and the cooling unit (12) being arranged in the vacuum container (2) and the sample holder (46) being detachable from the sample mount (40), when the sample mount (40) is cooled by the cooling unit (12), without heating a sample, which is in the sample holder (46), to more than the glass transition temperature of water.

2. The mounting device (1) according to claim 1, **characterized by** the fact that the sample mount (40) is fixed to an intermediate plate (36), which is arranged in the interior (34) of the vacuum container (2).

3. The mounting device (1) according to claim 2, **characterized by** the fact that the intermediate plate (36) is arranged via contact elements (38) in the interior (34) of the vacuum container (2), the contact elements having a lower thermal conductivity than the material of the intermediate plate (36) and the material of the vacuum container (2).

4. The mounting device (1) according to claim 2 or 3, **characterized by** the fact that the sample mount (40) is arranged on the intermediate plate (36) via contact elements (42), that have a lower thermal conductivity than the material of the intermediate plate (36) and the material of the sample mounts (40).

5. The mounting device (1) according to claim 3 or 4, **characterized by** the fact that the contact elements (38, 42) are made of polyimide or teflon.

6. The mounting device (1) according to one of the above claims, **characterized by** the fact that the cooling unit (12) has a container for liquid nitrogen or liquid helium.

7. The mounting device (1) according to one of the above claims, **characterized by** the fact that the sample mount (40) is connected to the cooling unit (12) via at least one, but preferably four flexible thermal conduction elements (44), which are particularly made of copper, but preferably made of oxygen-free copper.

8. The mounting device (1) according to one of the above claims **characterized by** the fact that at least one heat distributor (24) is arranged on the cooling unit (12), the sample mount (40) being thermally connected to the heat distributor (24).

9. The mounting device (1) according to claim 8, **characterized by** the fact that the at least one heat distributor (24) is a sheet made of copper, preferably made of oxygen-free copper, a thermal energy guiding bed, preferably containing indium, being arranged between the sheet and the cooling unit (12).

10. The mounting device (1) according to one of the above claims, **characterized by** the fact that the sample holder (46) is magnetically coupled to the sample mount (40).

11. The mounting device (1) according to one of the above claims, **characterized by** the fact that the vacuum container (2) has at least one window (30), through which electromagnetic radiation can be sent to a sample arranged on the sample holder (46).

12. The mounting device (1) according to claim 11, **characterized by** the fact that the window (30) is made of quartz crystal and is between 0.2 mm and 0.6 mm preferably 0.5 mm thick.

13. A visual examination device, particularly a microscope or spectroscope, with a mounting device (1) according to one of the above claims.

14. A method for removing a cooled sample from a mounting device (1) that has an evacuated vacuum container (2), in which the sample is fixed, the method having the following steps:
a) flushing the evacuated vacuum container (2) with a dry gas, which has a temperature of below the glass transition temperature of water,
b) Opening a suitable opening of the vacuum container (2) to remove the sample, so that the dry gas leaves the vacuum container (2) in a gas stream through the opening,
c) Loosening the mounting of the sample in the vacuum container (2) and
d) Removing the sample from the vacuum container (2) within the gas stream.

15. The method according to claim 14, **characterized by** the fact that before loosening the mounting of the sample the amount of dry gas leaving the vacuum container (2) is increased.
